# EUROPÄISCHE PATENTSCHRIFT

(11) **EP 2 340 376 B1**
(45) Veröffentlichungstag und Bekanntmachung des Hinweises auf die Patenterteilung: **23.01.2013**
(21) Anmeldenummer: 09749008.0
(22) Anmeldetag: 29.10.2009
(51) Int. Cl.: F16D 3/223, F16D 3/76, F16D 3/84

(54) **KUGELGELENK UND VERFAHREN ZU SEINER HERSTELLUNG**
BALL JOINT AND METHOD FOR THE PRODUCTION THEREOF
TRANSMISSION A BILLES ET SON PROCEDE DE FABRICATION

(30) Priorität: 31.10.2008 DE 102008054179
(43) Veröffentlichungstag der Anmeldung: 06.07.2011
(73) Patentinhaber: Shaft-Form-Engineering GmbH, 77756 Hausach (DE)
(72) Erfinder: DISSER, Claus, 63500 Seligenstadt (DE); STOPFER, Joachim, 63179 Obertshausen (DE)
(74) Vertreter: KEIL & SCHAAFHAUSEN Patentanwälte
(86) Internationale Anmeldenummer: PCT/EP2009/007769
(87) Internationale Veröffentlichungsnummer: WO 2010/049163

(56) Entgegenhaltungen:
- DE-A1-102006 039 340
- FR-A- 1 295 730
- GB-A- 2 137 310
- JP-A- 11 182 570
- US-A- 3 817 057

## Beschreibung

Die Erfindung betrifft ein Kugelgelenk, das zur Drehmomentübertragung im Antriebsstrang eines Kraftfahrzeugs angewendet werden kann. Das Kugelgelenk weist eine Innen- und eine Außennabe auf, in denen jeweils paarweise einander zugeordnete Laufbahnen angeordnet sind, in welchen jeweils eine Kugel zur Übertragung des Drehmoments vorgesehen ist. Weiter ist dem Gelenk ein Balg zum Abdichten des Gelenks zugeordnet, wobei die Außennabe zumindest ein mit den Laufbahnen versehenes inneres Element, ein dieses zumindest bereichsweise umgreifendes Dämpfungselement und wenigstens ein das innere Element und/oder das Dämpfungselement zumindest bereichsweise umgreifendes Befestigungselement aufweist. Weiter betrifft die Erfindung ein Verfahren zur Montage eines derartigen Kugelgelenks.

Aus der DE 10 2006 039 340 A1 ist eine Antriebswelle mit zwei als Kugelgelenke ausgebildeten Verschiebegelenken bekannt, bei denen jeweils ein Dämpfungselement zur Dämpfung von Schwingungsanregungen und Vibrationen zwischen einem inneren Element der Außennabe und einer Kappe angeordnet ist. Die Kappe umgreift das Dämpfungselement, in welchem wiederum ein inneres Element der Außennabe aufgenommen ist. Auf der Außenseite der Kappe ist ein auf der Innennabe festgelegter Balg zur Abdichtung des Gelenks befestigt. Die Kappe, das Dämpfungselement und das innere Element sind jeweils mit ineinander eingreifenden Konturen versehen, die eine formschlüssige Verbindung zwischen den Bauteilen ermöglichen. Die Kappe ist zur Anbindung eines treibenden oder anzutreibenden Bauteils über eine Schweißverbindung mit einer Hülse verbunden. Neben der grundsätzlichen Gefahr eines Wärmeverzugs einer solchen Schweißverbindung ist diese Art der Anbindung des Gelenks an die Hülse aufwendig.

Die JP 2005-214344 A schlägt ein sogenanntes UF-Gelenk mit einem Dämpfungselement vor, bei dem die Außennabe glockenförmig gestaltet und von einem ebenfalls glockenförmigen Dämpfungselement umgeben ist. Dieses ist wiederum in einem mit einer der Außenform des Dämpfungselementes entsprechend glockenförmig gestalteten Aussparung versehenen Aufnahmeelement angeordnet. Die Außennabe und das Dämpfungselement werden in dem Aufnahmeelement durch ein hülsenartiges Befestigungselement axial fixiert, das an beiden Enden nach innen geklappte Abschnitte aufweist. Die Montage der einzelnen Elemente des Kugelgelenks, also das Einbringen des Dämpfungselements und der Außennabe in das glockenförmige Aufnahmeelement ist schwierig, da leicht Verkantungseffekte entstehen können. Darüber hinaus ist die passgenaue Herstellung der ineinander angeordneten glockenförmigen Bauteile aufwendig und birgt die Gefahr einer Überbestimmung.

Grundsätzlich weisen mit Dämpfungselementen versehene Gelenke, die in axialer Richtung durch zweifaches Umbördeln oder Umklappen von Abschnitten fixiert werden, neben der zeitaufwendigeren Montage auch den Nachteil auf, dass die meist aus einem Kunststoff bestehenden Dämpfungselemente keiner definierten Flächenpressung ausgesetzt sind. Eine prozesssichere Montage ist damit nicht möglich.

Es ist daher Aufgabe der vorliegenden Erfindung ein schwingungs- und vibrationsdämpfendes Kugelgelenk anzugeben, das schnell und in wenigen Arbeitsschritten prozesssicher montiert werden kann.

Diese Aufgabe wird erfindungsgemäß im Wesentlichen dadurch gelöst, dass ein radial nach innen geklappten Abschnitt des genau ein Befestigungselements die axiale Befestigung des inneren Elements, des Dämpfungselements und des Balgs bewiret. Hierbei können das Dämpfungselement, die Außen- und die Innennabe mit den Kugeln in einem ersten Arbeitsschritt in die zur Fixierung vorgesehene Position gebracht werden. Anschließend bedarf es nur noch eines weiteren Arbeitschrittes, nämlich das Umbördeln bzw. Einklappen des Abschnitts des Befestigungselements, um diese Bauteile zu fixieren. Diese Bauweise ermöglicht eine Senkung des Produktionsaufwands für ein Kugelgelenk oder eine Gelenkwelle. Ebenso bewirkt eine Reduzierung der Durchlaufzeiten in der Montage eine Verbesserung der Wirtschaftlichkeit in der Fertigung und schafft die Voraussetzungen, dem Kostendruck, wie er z.B. auf der Zuliefererindustrie in der Automobilwirtschaft lastet, effizient entgegenzutreten. Von besonderem Vorteil ist es dabei, dass das Dämpfungselement einer definierten Belastung ausgesetzt wird, da nur ein einziges Befestigungselement über eine voreinstellbare Kraft- und/oder Wegsteuerung nach innen umgeklappt wird. Dies erlaubt eine wiederholbare, zuverlässige Montage.

Nach einer ersten Ausführungsform der Erfindung ist das Befestigungselement eine Kappe, die die Außennabe und ein Mitnehmergehäuse, das zur unmittelbaren Anbindung einer Hohlwelle ausgebildet ist, umgreift. Unter einer unmittelbaren Anbindung einer Hohlwelle wird dabei entweder eine einstückige Ausbildung des Mitnehmergehäuses und der Hohlwelle, beispielsweise in einem Umformverfahren, oder eine Verschweißung oder dgl. Verbindung dieser Bauteile ohne die Zwischenschaltung weiterer Elemente verstanden.

Alternativ hierzu ist das Befestigungselement ein Mitnehmergehäuse, das zur unmittelbaren Anbindung einer Hohlwelle ausgebildet ist. Hierdurch kann der Materialeinsatz und Montageaufwand weiter reduziert werden. Bei einer solchen Ausführung kann auf eine Kappe verzichtet werden, was den Einsatz von Produktionsmitteln und Rohstoffen verringert. Gleichzeitig wird ein schlankeres Kugelgelenk realisiert, was den für dieses Bauteil benötigten Bauraum und das Gewicht weiter reduziert.

Für die Befestigung eines Balgs, z.B. eines Faltenbalgs bei Gelenkwellen, stehen verschiedene separate Bauteile zur Verfügung, insbesondere Spann- bzw. Klemmelementen sowie Kompressionsringe. Der hiermit verbundene Montageaufwand ist jedoch relativ hoch. Daher wird es bevorzugt, wenn der Balg, durch welchen die Außennabe gegen ein mit der Innennabe drehfest verbindbares Anschlusselement abdichtbar ist, zwischen Dämpfungselement und Befestigungselement gehalten ist. Der Balg muss damit nicht separat befestigt werden.

Nach einer bevorzugten Ausführungsform besteht das Dämpfungselement aus zwei Formteilen, die jeweils einen profilierten, hülsenartigen Abschnitt und einen davon im Bereich eines stirnseitigen Endes des inneren Elements radial nach innen wegragenden Flanschabschnitt aufweisen. Dies ermöglicht es, das innere Element der Außennabe so vollständig mit dem (zweigeteilten) Dämpfungselement zu umgreifen, dass kein direkter Kontakt zwischen dem inneren Element und dem Mitnehmergehäuse besteht. Auf diese Weise werden das Mitnehmergehäuse und das innere Element voneinander entkoppelt. Zudem verbessert die in Axialrichtung des Gelenks zweigeteilte Ausbildung des Dämpfungselements dessen Montierbarkeit.

Vorzugsweise sind die Formteile des Dämpfungselements baugleich, was die Produktions- und Lagerhaltungskosten senkt und die Gefahr von Montagefehlern minimiert. Es ist jedoch grundsätzlich auch möglich, Formteile zu verwenden, die nicht baugleich sind, d.h unterschiedliche Formen und/oder Dicken besitzen.

Für das Dämpfungselement des erfindungsgemäßen Kugelgelenks eignen sich unterschiedliche Materialien. So kann das Dämpfungselement beispielsweise zumindest teilweise aus einem Aluminiumwerkstoff, aus einem Kunststoff, insbesondere einem Kunstoff-Verbundwerkstoff, und/oder aus einem Gummi- oder Kautschukwerkstoff bestehen. Bevorzugt sind hier temperaturbeständige Kunststoffe zu verwenden, die in der Lage sind, die Temperaturen, die im Inneren des Kugelgelenks aufgrund von Reibungseffekten entstehen, ohne Einfluss auf ihre Dämpfungscharakteristik zu kompensieren

Nach einer alternativen Ausführungsform der Erfindung kann das Dämpfungselement auch direkt auf das innere Element und/oder auf das Mitnehmergehäuse aufgespritzt oder -gegossen werden. Danach könnten das Dämpfungselement und das innere Element als einstückiges Bauteil im weiteren Montageprozess behandelt werden, wodurch weitere Montagearbeitschritte entfallen. In Weiterführung des Erfindungsgedankens kann das Dämpfungselement auch einstückig mit dem Balg ausgebildet sein, wodurch die Positionierung des Balgs zur axialen Befestigung in einem Arbeitsschritt mit der Positionierung des Dämpfungselements erfolgen kann. Eine andere Variante besteht darin, dass eine Nut an dem Dämpfungselement ein Ende des Balgs aufnimmt, was die korrekte Positionierung des Balgs für die axiale Fixierung im Montageprozess deutlich erleichtert.

Ein weitere vorteilhafte Ausführungsform sieht vor, dass ein das Gelenk innenseitig abdichtendes Dichtungselement, wie ein Deckel, und das Dämpfungselement einstückig ausgebildet sind. Der Deckel wird bspw. beim Einsetzen des inneren Elementes in das Mitnehmergehäuse zwischen dem inneren Element und einer Schulter des Mitnehmergehäuses platziert, wobei das integral mit dem Deckel ausgebildete Dämpfungselement das innere Element zumindest bereichsweise umgreift. Der Deckel sitzt derart abgedichtet in dem Mitnehmergehäuse, dass ohne das Vorsehen zusätzlicher Dichtungselemente das Eindringen von Schmutzpartikeln in das Gelenk bzw. der Verlust von Schmiermittel verhindert werden kann. Idealerweise erstreckt sich der Deckel in einem hülsenartigen Abschnitt in axialer Richtung derart um das innere Element, dass kein direkter Kontakt zwischen dem inneren Element und dem Mitnehmergehäuse besteht. Der Deckel kann in Ausbildung dieses Erfindungsgedankens das innere Element nicht nur umgreifen sondern auch mit einem weiteren bspw. als Formteil ausgebildeten Dämpfungselement dämpfend zusammenarbeiten. Beispielsweise kann das Formteil das innere Element von seiner anderen Seite umgreifen. In diesem Sinne ist es auch möglich, dass sowohl beide, als auch jeweils nur eines aus Formteil und Deckel in einen hülsenartigen Abschnitt übergehen, der das innere Element umgreift. Es lässt sich auf diese Weise nicht nur eine einfache Montage realisieren, sondern auch die Anzahl der benötigten Bauteile herabsetzen.

Eine gezielte Einstellung der Dämpfungseigenschaften lässt sich dadurch erreichen, dass an dem Dämpfungselement zusätzliche Aussparungen vorgesehen sind. Diese können mit einem Material gefüllt sein, das sich von dem Material des Dämpfungselementes unterscheidet oder zumindest andere Dämpfungseigenschaften aufweist. Nach einer bevorzugten Ausführungsform verlaufen die Aussparungen in axialer Richtung des Gelenks.

Vorteilhafterweise sind die Aussparungen auf der dem inneren Element zugewandten Seite des Dämpfungselements angeordnet. Selbstverständlich können die Aussparungen alternativ oder zusätzlich auf der dem Mitnehmergehäuse oder der Kappe zugewandten Seite des Dämpfungselementes vorgesehen sein. Auf diese Weise lässt sich das Dämpfungsverhalten des Kugelgelenkes kundenspezifisch und mit wenig Aufwand und Kosten optimal einstellen. Grundsätzlich kann das Dämpfungselement auch Bestandteil des Mitnehmergehäuses oder der Kappe sein.

Es wird besonders bevorzugt, wenn das Kugelgelenk ein Gegenbahngelenk ist, bei welchem die Innennabe und die Außennabe jeweils erste und zweite Laufbahnen aufweist, die abwechselnd um den Umfang verteilt sind. Die ersten Laufbahnpaare öffnen sich dabei in einer ersten axialen Richtung des Gelenks, während die zweiten Laufbahnpaare sich in die entgegengesetzte Richtung öffnen. Hierunter wird verstanden, dass sich der Bahngrund der einander paarweise zugeordneten inneren und äußeren Laufbahnen in axialer Richtung gesehen voneinander entfernt. Der grundsätzliche Aufbau eines Gegenbahngelenks ist beispielsweise in der DE 102 09 933 A1 beschrieben. Das erfindungsgemäße Gelenk verbindet somit die Vorteile dieser reibungsarmen Gelenkkonstruktion mit den Vorteilen eines Dämpfungselements.

Die Vorteile der Erfindung zeigen sich insbesondere beim Einsatz eines derartigen Gelenks in einer Antriebsanordnung für ein Kraftfahrzeug, z.B. in einer Gelenkwelle. Eine solche Anordnung weist wenigstens ein Gelenk der oben beschriebenen Art und wenigstens einen Hohlwellenabschnitt auf. In einer derartigen Gelenkwelle lassen sich Schwingungsanregungen aus dem Antriebsstrang, wie sie beispielsweise während der Schlupfphase in der schlupfenden Kupplung oder durch Getriebegeräusche erzeugt werden, wirksam kompensieren, da sämtliche Stöße oder Vibrationen durch die gedämpften Kugelgelenke aufgenommen werden können.

Die Aufgabe der Erfindung wird unabhängig von den zuvor beschriebenen Merkmalen durch ein Verfahren zur Herstellung eines Kugelgelenks der eingangs genannten Art gelöst, wobei das Dämpfungselement zunächst zwischen dem inneren Element und dem Befestigungselement angeordnet wird und danach das innere Element und das Dämpfungselement in nur einem Arbeitsschritt durch Umklappen wenigstens eines Abschnitts des Befestigungselements in axialer Richtung miteinender verbunden werden. Neben dem Vorteil der erhöhten Prozesssicherheit kann hierdurch auch die Montagezeit verringert werden.

In Weiterbildung dieses Erfindungsgedankens wird gleichzeitig mit der axialen Verbindung des inneren Elements, des Dämpfungselements und des Befestigungselements auch ein Balg durch das Umklappen eines Abschnitts des Befestigungselements an der Außennabe fixiert. Ein nachträglicher Arbeitsschritt zur Befestigung des Balgs kann somit entfallen.

Nach einer weiteren Ausführungsform des erfindungsgemäßen Verfahrens werden die beiden in axialer Richtung hintereinander angeordneten Formteile, aus denen das Dämpfungselement besteht, gleichzeitig mit der axialen Fixierung des inneren Elements und des Dämpfungselements in dem Mitnehmergehäuse durch das Umklappen eines Abschnittes des Befestigungselements in axialer Richtung fixiert. Auch dies vereinfacht den Montageaufwand und verkürzt die Bauzeit eines Gelenks weiter.

Weiterbildungen und vorteilhafte Anwendungsmöglichkeiten ergeben sich aus der nachfolgenden Beschreibung von Ausführungsbeispielen und der Zeichnung. Dabei bilden alle beschreibenden und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: einen Längsschnitt durch ein Kugelgelenk nach einer ersten Ausführungsform der Erfindung,
- Fig. 2: einen Längschnitt durch ein Kugelgelenk nach einer weiteren Ausführungsform der Erfindung,
- Fig. 3: einen Schnitt durch das Gelenk nach Fig. 2 entlang der Linie III-III,
- Fig.4: einen Schnitt durch ein Kugelgelenk nach einer weiteren Ausführungsform der Erfindung,
- Fig. 5: einen Schnitt durch das Gelenk nach Fig. 4 entlang der Linie IV-IV und
- Fig. 6: einen Schnitt durch ein Kugelgelenk nach einer weiteren Ausführungsform der Erfindung.

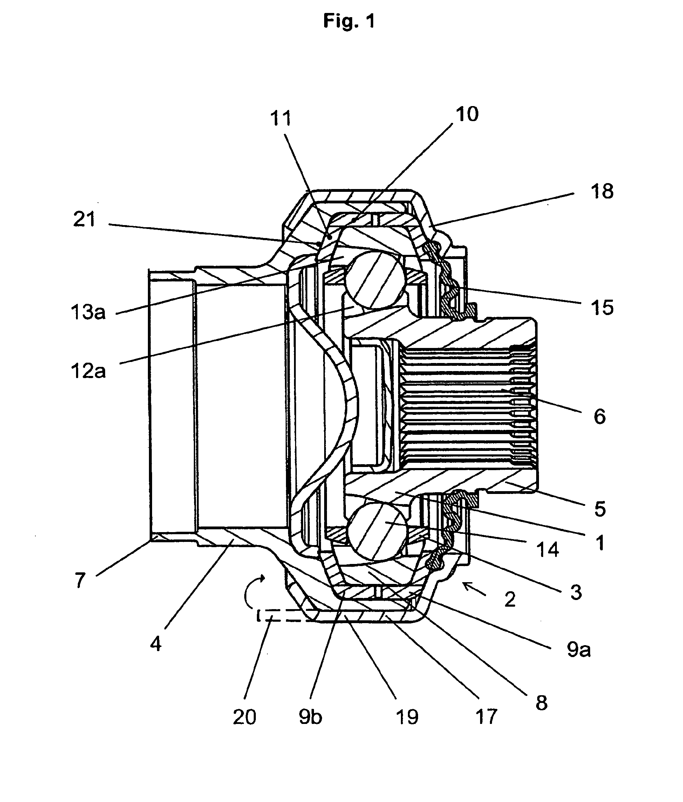

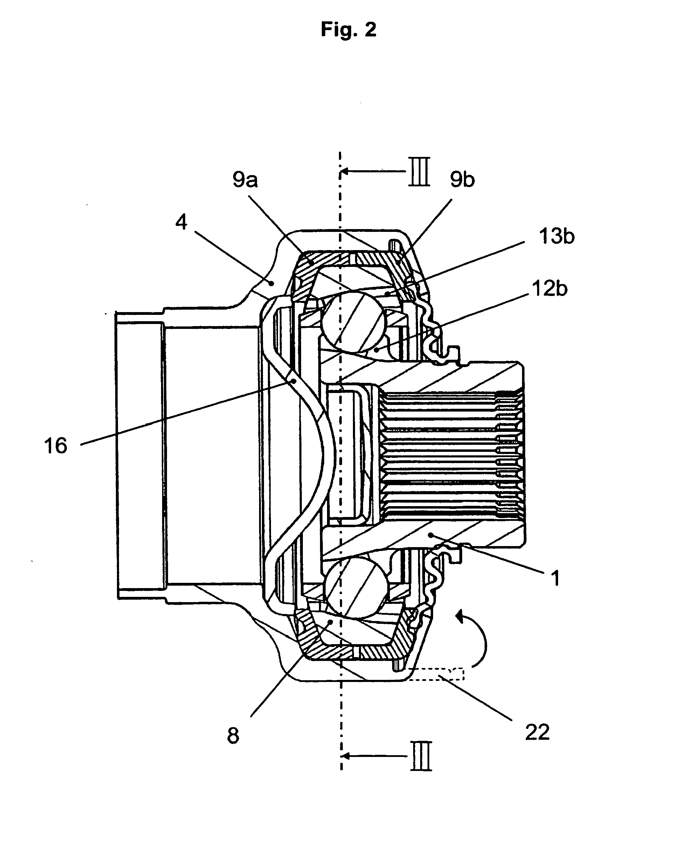

Die in den Figuren 1 und 2 dargestellten Gelenke weisen jeweils eine Innennabe 1, eine Außennabe 2, einen zwischen der Innennabe 1 und der Außennabe 2 geführten Käfig 3 sowie ein Mitnehmergehäuse 4 auf. Die Innennabe 1 und das Mitnehmergehäuse 4 sind dabei jeweils zur Anbindung eines treibenden oder anzutreibenden Bauteils ausgebildet. So ist die Innennabe 1 mit einem hülsenartigen Abschnitt 5, der zur drehfesten Anbindung eines Wellenzapfens oder dgl. mit einer Verzahnung 6 versehen ist, ausgestattet und das Mitnehmergehäuse 4 ist mit einem Verbindungsbereich 7 versehen, über welchen eine Hohlwelle (nicht dargestellt) mit dem Mitnehmergehäuse 4 verschweißt werden kann.

Die Außennabe 2 weist in den dargestellten Ausführungsformen ein ringartiges inneres Element 8 sowie ein aus zwei Formteilen 9a, 9b bestehendes Dämpfungselement aus einem elastisch verformbaren Material, bspw. Kunststoff, auf. Dabei umgreifen die beiden Formteile 9a, 9b des Dämpfungselements das innere Element 8 von außen und an den Stirnseiten. Hierzu ist jedes der Formteile 9a, 9b mit einem hülsenartigen Abschnitt 10, der formschlüssig an dem Außenumfang des inneren Elements 8 anliegt, und einem etwa radial nach innen ragenden Flanschabschnitt 11 ausgebildet, der an den Stirnseiten des inneren Elements 8 anliegt. Das innere Element 8 und das Dämpfungselement weisen zur Drehmomentübertragung jeweils eine Profilierung auf, wobei die Innenkontur des Mitnehmergehäuses 4, das das Dämpfungselement mit dem inneren Element 8 umgreift, mit einer entsprechenden Profilierung ausgebildet ist.

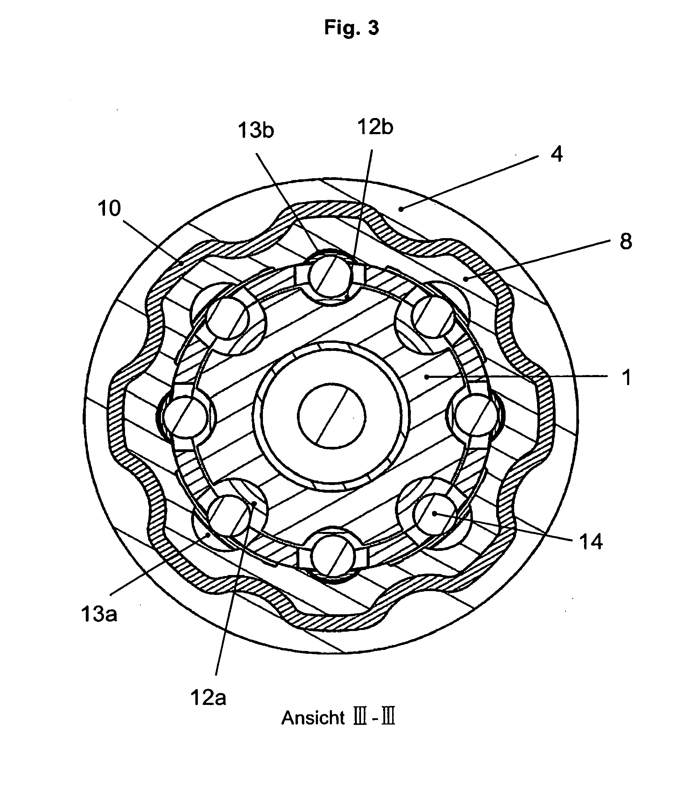

Auf der Innennabe 1 sind erste und zweite innere Laufbahnen 12a, 12b und auf dem inneren Element 8 der Außennabe 2 sind erste und zweite äußere Laufbahnen 13a, 13b ausgebildet. Dabei sind die ersten Laufbahnen 12a, 13a und die zweiten Laufbahnen 12b, 13b einander paarweise zugeordnet. Wie aus Figur 3 ersichtlich, sind diese ersten und zweiten Laufbahnpaare abwechselnd um den Umfang des Gelenks verteilt angeordnet. In den dargestellten Ausführungsformen sind acht Laufbahnpaare in einem Gelenk vorgesehen, so dass erste Laufbahnpaare ersten Laufbahnpaaren gegenüberliegen und entsprechend zweite Laufbahnpaare zweiten Laufbahnpaaren gegenüberliegen. Daher sind in der Ansicht der Figur 1 nur erste Laufbahnpaare zu sehen, während in Figur 2 nur zweite Laufbahnpaare gezeigt sind.

Die Laufbahnpaare unterscheiden sich dadurch voneinander, dass sich der Bahngrund der ersten Laufbahnen 12a, 13a in Figur 1 von links nach rechts voneinander entfernt, d.h. die ersten Laufbahnpaare öffnen sich in Richtung zu dem hülsenartigen Abschnitt 5. Dagegen entfernt sich der Bahngrund der zweiten Laufbahnen 12b, 13b in Figur 2 von rechts nach links voneinander, d.h. die zweiten Laufbahnpaare öffnen sich in Richtung zu dem Verbindungsbereich 7. Die in den Figuren dargestellten Kugelgelenke sind somit Gegenbahngelenke, d.h. Festgelenke, die zwar ein Abwinkeln der Innennabe 1 gegenüber der Außennabe 2 gestatten, eine axiale Verschiebung dieser beiden Bauteile zueinander jedoch nicht zulassen.

In jedem der Laufbahnpaare ist eine Kugel 14 zur Drehmomentübertragung aufgenommen. Die Kugeln sind dabei in dem Käfig 3 gehalten.

Weiter sind die in den Figuren gezeigten Gelenke jeweils mit einem Balg 15 ausgestattet, der das Gelenk zwischen der Innennabe 1 und der Außennabe 2 auf der Seite des hülsenartigen Abschnitts 5 abdichtet. Auf der gegenüberliegenden Seite des Gelenks ist ein bspw. als Dichtungselement wirkender Deckel 16 vorgesehen, der in dem Mitnehmergehäuse 4 aufgenommen ist.

Das Gelenk nach Figur 1 besitzt zusätzlich eine Kappe 17, die das Mitnehmergehäuse 4 umgreift. Diese Kappe 17 dient als ein Befestigungselement zum Fixieren des Mitnehmergehäuses 4, der beiden Formteile 9a, 9b des Dämpfungselements, des inneren Elements 8 sowie des Balgs 15 aneinander. Hierzu ist die Kappe 17 zunächst wie in Figur 1 unten gestrichelt angedeutet ausgebildet, d.h. die Kappe weist einen etwa radial nach innen ragenden, profilierten Flanschbereich 18 auf, an den sich eine das Mitnehmergehäuse 4 umgreifende Hülse 19 anschließt. Diese Hülse 19 ist mit einem dem Flanschbereich 18 abgewandten Umklappabschnitt 20 versehen, der sich vor der Montage des Gelenks in Verlängerung der Hülse 19 erstreckt.

Bei der Montage werden das Dämpfungselement 9a, 9b, das innere Element 8 sowie die Kugeln 14 und die Innennabe 1 in das Mitnehmergehäuse 4 eingeführt. Das in Figur 1 linke Formteil 9a liegt dabei mit seinem radial nach innen ragenden Flanschabschnitt 11 definiert an einer inneren Anschlagfläche 21 des Mitnehmergehäuses 4 an. Anschließend wird die Kappe 17 auf das Mitnehmergehäuse 4 aufgesteckt, bis der Flanschbereich 18 der Kappe 17 definiert an dem Balg 15 und dem in der Figur rechten Formteil 9b anliegt. In dieser Position wird der Umklappabschnitt 20 der Kappe 17 so umgebördelt, d.h. wie durch den Pfeil in Figur 1 angedeutet radial nach innen geklappt, dass der Umklappabschnitt 20 das Mitnehmergehäuse 4 hintergreift. Die Kappe 17 bildet somit ein Befestigungselement zur axialen Befestigung des inneren Elements 8, des Dämpfungselements und des Balgs 15 an dem Mitnehmergehäuse 4.

Bei der in den Figuren 2 und 3 dargestellten Ausführungsform ist die äußere Kappe 17 entfallen und das Mitnehmergehäuse 4 dient als Befestigungselement zur axialen Befestigung des inneren Elements 8, des Dämpfungselements und des Balgs 15 an dem Mitnehmergehäuse 4. Hierzu ist an dem Mitnehmergehäuse 4 ein hülsenartiger Umklappabschnitt 22 ausgebildet, der sich, wie in Figur 2 gestrichelt angedeutet, vor der Montage des Gelenks in Verlängerung des hülsenartigen Bereichs des Mitnehmergehäuses 4 erstreckt.

Die Montage erfolgt bei diesem Gelenk zunächst wie unter Bezugnahme auf Figur 1 erläutert. Zur axialen Befestigung des inneren Elements 8, des Dämpfungselements und des Balgs 15 an dem Mitnehmergehäuse 4 wird jedoch statt einer Kappe 17 der Umklappabschnitt 22 des Mitnehmergehäuses 4 so umgebördelt, d.h. wie durch den Pfeil in Figur 2 angedeutet radial nach innen geklappt, dass der Umklappabschnitt 22 den Balg 15 und das in der Figur rechte Formteil 9b hintergreift.

Zur Befestigung des Balgs 15 an der Außennabe 2 sind vorzugsweise an einem Formteil 9b des Dämpfungselements sowie an der Kappe 17 (Figur 1) bzw. an dem Umklappabschnitt 22 des Mitnehmergehäuses 4 (Figur 2) Nuten zur Aufnahme eines wulstartigen Endes des Balgs 15 vorgesehen. Wenn die Formteile 9a, 9b des Dämpfungselements wie in Figur 2 gezeigt baugleich ausgebildet sind, weisen beide Formteile eine solche Nut auf, obwohl nur das in der Figur rechte Formteil 9b zur Befestigung des Balgs 15 dient.

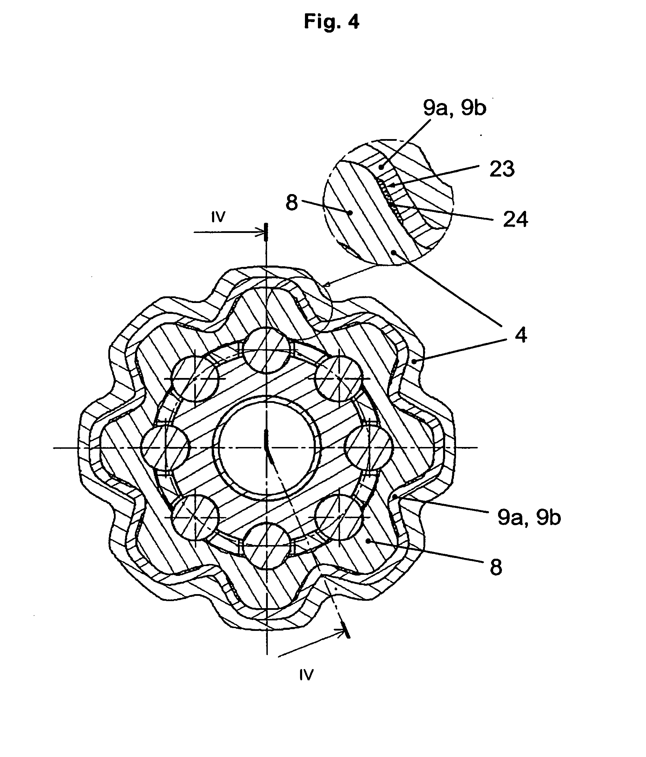

Die Dämpfungseigenschaften des in der Fig. 4 dargestellten Kugelgelenkes können durch Aussparungen im Dämpfungselement gezielt und kundenspezifisch eingestellt werden. Wie die kreisförmige Vergrößerung eines ausgewählten Bereiches zwischen Mitnehmergehäuse 4 und innerem Element 8 zeigt, besitzt das Dämpfungselement 9a, 9b Aussparungen 23, welche mit einem Dämpfungsmaterial gefüllt sein können, dessen Eigenschaften sich von dem Dämpfungselement 9a, 9b unterscheideen. Die Aussparungen 23 erstrecken sich längs des inneren Elementes 8, wobei diese gefüllten Aussparungen alternativ oder zusätzlich zwischen dem Dämpfungselement 9 und dem Mitnehmergehäuse 4 bzw. einer Kappe 17 angeordnet sein können.

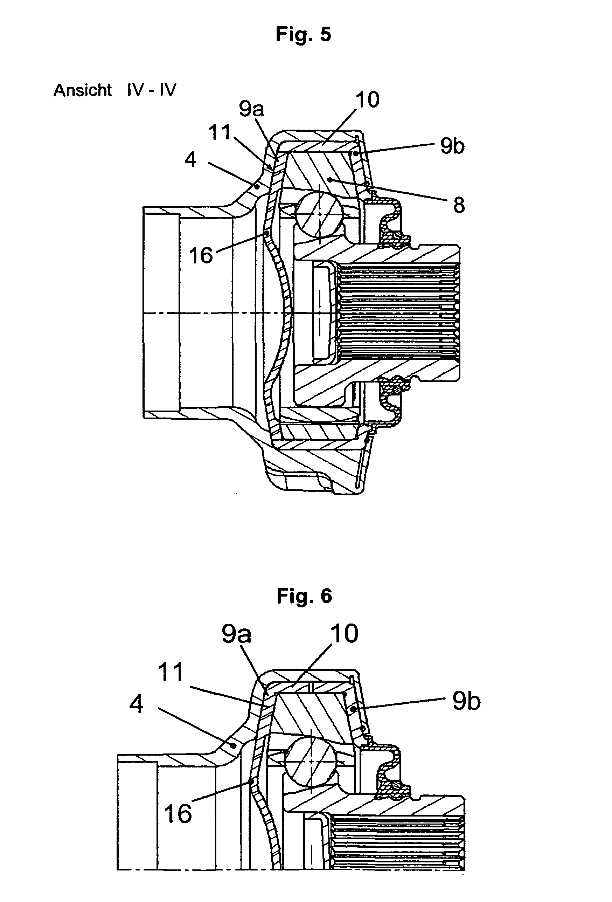

Die Schnittansicht des in der Fig. 4 dargestellten Gelenkes entlang der Linie IV-IV zeigt die Figur 5. Das hierin abgebildete Dämpfungselement 9b ist derart aufgebaut, dass es sich in den hülsenartigen Abschnitt 10 erstreckt und mit seinem linksseitigen Ende an dem Mitnehmergehäuse 4 anliegt. Damit wird das Kugelgelenk zunächst in eine axiale Richtung und radial gedämpft. Die in die entgegen gesetzte axiale Richtung wirkende Dämpfung wird durch den Deckel 16 möglich, der sich in radialer Richtung derart erstreckt, dass er den Flanschabschnitt 11 bildet, der an der Stirnseite des inneren Elementes 8 anliegt. Die Funktion des in den Figuren 1 bis 3 dargestellten Formteils 9a ist somit in den Deckel 16 integriert, bzw. der Deckel 16 und das Formteil 9a sind einstückig ausgebildet. Der Deckel 16 weist in seinen zumindest den für die Dämpfung relvanten Bereichen das gewünschte Dämpfungsverhalten auf.

Alternativ zu der Ausgestaltung des Deckels 6 in der Fig. 5, kann der als zweites Formteil 9a agierende Deckel 16 auch zusätzlich einstückig in einen hülsenartigen Abschnitt 10 übergehen, der das innere Element 8 umgreift. was in der Fig. 6 dargestellt ist. Der Deckel 16 erstreckt sich zunächst in radialer Richtung derart, dass er die Funktion eines Formteils 9a übernimmt. Der Deckel 16 bildet dadurch den Flanschabschnitt 11. Im Anschluss daran ist der Deckel 16 mit dem hülsenartigen Abschnitt 10 ausgebildet, der sich in axialer Richtung erstreckt und dabei das innere Element 8 bereichsweise umgibt. Ein anderes Formteil 9b ist von der anderen Seite des inneren Elementes 8 aufgesteckt und erstreckt sich ebenfalls hülsenartig in einem horizontalen Abschnitt um das innere Element 8. Mit dieser Ausgestaltung des Deckels wird eine Möglichkeit zur Verfügung gestellt, auf das erste Formteil 9a (Fig. 1 bis 3) zu verzichten, ohne die Dämpfungseigenschaften des Kugelgelenks zu beeinflussen.

### Bezugszeichenliste

- 1: Innennabe
- 2: Außennabe
- 3: Käfig
- 4: Mitnehmergehäuse
- 5: hülsenartiger Abschnitt
- 6: Verzahnung
- 7: Verbindungsbereich
- 8: inneres Element
- 9a, b: Formteil des Dämpfungselements
- 10: hülsenartiger Abschnitt
- 11: Flanschabschnitt
- 12a: erste innere Laufbahn
- 12b: zweite innere Laufbahn
- 13a: erste äußere Laufbahn
- 13b: zweite äußere Laufbahn
- 14: Kugel
- 15: Balg
- 16: Deckel
- 17: Kappe
- 18: Flanschbereich
- 19: Hülse
- 20: Umklappabschnitt
- 21: Anschlagfläche
- 22: Umklappabschnitt
- 23: Aussparungen
- 24: zusätzliches Material

## Patentansprüche

1. Kugelgelenk, insbesondere Gegenbahngelenk, mit einer ersten und einer zweiten Seite und mit einer Innennabe (1) und einer Außennabe (2), in denen jeweils paareinweise einander zugeordnete Laufbahnen (12a, 13a; 12b, 13b) angeordnet sind, in welchen jeweils eine Kugel (14) zur Übertragung des Drehmoments vorgesehen ist, und mit einem Balg (15) zum Abdichten des Gelenks, wobei die Außennabe (2) zumindest ein mit den Laufbahnen (13a, 13b) versehenes inneres Element (8), ein dieses zumindest bereichsweise umgreifendes Dämpfungselement (9a, 9b) und wenigstens ein das innere Element (8) und/oder das Dämpfungselement (9a, 9b) zumindest bereichsweise umgreifendes Befestigungselement (4; 17) aufweist, **dadurch gekennzeichnet, dass** ein radial nach innen geklappter Abschnitt (20; 22) des genau einen Befestigungselements (4; 17) die axiale Befestigung des inneren Elements (8), des Dämpfungs-elements (9a, 9b) und des Balgs (15)
bewirkt und dass Befestigungs-element eine Kappe (17) ist, die die Außennabe (2) und ein Mitnehmergehäuse (4), das zur unmittelbaren Anbindung einer Hohlwelle ausgebildet ist, umgreift.

2. Kugelgelenk nach Anspruch 1, **dadurch gekennzeichnet, dass** das Befestigungselement ein Mitnehmergehäuse (4) ist, das zur unmittelbaren Anbindung einer Hohlwelle ausgebildet ist.

3. Kugelgelenk nach einem der Ansprüche 1 bis 2, **dadurch gekennzeichnet, dass** der Balg (15), durch welchen die Außennabe (2) gegen ein mit der Innennabe (1) drehfest verbindbares Anschlusselement abdichtbar ist, zwischen Dämpfungselement (9a, 9b) und Befestigungselement (4; 17) gehalten ist.

4. Kugelgelenk einem der vorhergehenden Ansprüche, **dadurch gekennzeichnet, dass** das Dämpfungselement aus zwei Formteilen (9a, 9b) besteht, die jeweils einen profilierten, hülsenartigen Abschnitt (10) und einen davon im Bereich eines stirnseitigen Endes des inneren Elements (8) radial nach innen wegragenden Flanschabschnitt (11) aufweisen.

5. Kugelgelenk nach einem der vorhergehenden Ansprüche, **dadurch gekennzeichnet, dass** das Dämpfungselement (9a, 9b) zumindest teilweise aus einem Aluminiumwerkstoff, aus einem Kunststoff, insbesondere einem Kunstoff-Verbundwerkstoff und/oder aus einem Kautschukwerkstoff besteht.

6. Kugelgelenk nach einem der vorhergehenden Ansprüche, **dadurch gekennzeichnet, dass** das Dämpfungselement direkt auf das innere Element (8) und/oder auf das Mitnehmergehäuse (4) gespritzt ist.

7. Kugelgelenk nach einem der vorhergehenden Ansprüche, **dadurch gekennzeichnet, dass** das Dämpfungselement einstückig mit dem Balg (15) ausgebildet ist.

8. Kugelgelenk nach einem der Ansprüche 1 bis 6, **dadurch gekennzeichnet, dass** an dem Dämpfungselement (9a, 9b) mindestens eine Nut vorgesehen ist, die ein Ende des Balgs (15) aufnimmt.

9. Kugelgelenk nach einem der vorhergehenden Ansprüche mit einem das Kugelgelenk innenseitig zumindest in eine Richtung abdichtenden Dichtungselement (16), **dadurch gekennzeichnet, dass** das Dichtungselement (16) und das Dämpfungselement (9a, 9b) einstückig ausgebildet sind.

10. Kugelgelenk nach einem der vorhergehenden Ansprüche, **dadurch gekennzeichnet, dass** das Dichtungselement (9a, 9b) zumindest eine Aussparung (23) aufweist und dass in der Aussparung (23) ein Material (24) angeordnet ist, das sich von dem Material des Dämpfungselementes (9a, 9b) unterscheidet und/oder zumindest andere Dämpfungseigenschaften aufweist.

11. Kugelgelenk nach Anspruch 10, **dadurch gekennzeichnet, dass** die zumindest eine Aussparung (23) auf der dem inneren Element (8) zugewandten Seite und/oder auf der dem Befestigungselement (4, 17) zugewandten Seite des Dämpfungselementes (9a, 9b) angeordnet ist.

12. Antriebsanordnung für ein Kraftfahrzeug, das wenigstens ein Gelenk nach einem der vorhergehenden Ansprüche und wenigstens einen Hohlwellenabschnitt aufweist.

13. Verfahren zur Herstellung eines Kugelgelenks, insbesondere nach einem Ansprüche 1 bis 11, mit einer Innennabe (1) und einer Außennabe (2), die zumindest ein mit Laufbahnen (13a, 13b) versehenes inneres Element (8), ein dieses zumindest bereichsweise umgreifendes Dämpfungselement (9a, 9b) und wenigstens ein das innere Element (8) und/oder das Dämpfungselement (9a, 9b) zumindest bereichsweise umgreifendes Befestigungselement (4; 17) aufweist, **dadurch gekennzeichnet, dass** das Dämpfungselement (9a, 9b) zwischen dem inneren Element (8) und dem Befestigungselement (4; 17) angeordnet wird und danach das innere Element (8) und das Dämpfungselement (9a, 9b) in nur einem Arbeitsschritt durch Umklappen wenigstens eines Abschnitts (20; 22) des Befestigungselements (4; 17) in axialer Richtung miteinender verbunden werden.

14. Verfahren nach Anspruch 13, **dadurch gekennzeichnet, dass** gleichzeitig mit der axialen Verbindung des inneren Elements (8), des Dämpfungselements (9a, 9b) und des Befestigungselements (4; 17) auch ein Balg (15) durch das Umklappen eines Abschnittes (20; 22) des Befestigungselements (4; 17) an der Außennabe (2) fixiert wird.

15. Verfahren nach Anspruch 13 oder 14, **dadurch gekennzeichnet, dass** das Dämpfungselement aus wenigstens zwei in axialer Richtung hintereinander angeordneten Formteilen (9a, 9b) besteht, welche gleichzeitig mit der axialen Verbindung des inneren Elements (8), des Dämpfungselements und des Befestigungselements (4; 17) durch das Umklappen eines Abschnitts (20; 22) des Befestigungselements (4; 17) in axialer Richtung fixiert werden.

## Claims

1. A ball joint, in particular a counter track joint, with a first and a second side, and with an inner hub (1) and an outer hub (2) in which in each case raceways (12a, 13a; 12b, 13b) are arranged which are associated with each other in pairs and in which in each case one ball (14) is provided for transmitting the torque, and with a bellow (15) for sealing the joint, wherein the outer hub (2) comprises at least one inner element (8) provided with the raceways (13a, 13b), a damping element (9a, 9b) at least regionally engaging around said inner element, and at least one fastening element (4; 17) at least regionally engaging around the inner element (8) and/or the damping element (9a, 9b), **characterized in that** a radially inward folded section (20; 22) of the exactly one fastening element (4; 17) effects the axial fastening of the inner element (8), the damping element (a, 9b) and the bellow (15), and that the fastening element is a cap (17) which engages around the outer hub (2) and a driver housing (4) that is formed for directly connecting a hollow shaft.

2. The ball joint according to claim 1, **characterized in that** the fastening element is a driver housing (4) that is designed for directly connecting a hollow shaft.

3. The ball joint according to any one of the claims 1 to 2, **characterized in that** the bellows (15), by means of which the outer hub (2) can be sealed with respect to a connection element that can be non-rotatably connected to the inner hub (1), is held between the damping element (9a, 9b) and the fastening element (4; 17).

4. The ball joint according to any one of the preceding claims, **characterized in that** the damping element consists of two molded parts (9a, 9b) which each have a profiled sleeve-like section (10) and a flange section (11) projecting therefrom radially inward in the region of a front end of the inner element (8).

5. The ball joint according to any one of the preceding claims, **characterized in that** the damping element (9a, 9b) consists at least partially of an aluminum material, of a plastic, in particular a plastic composite material and/or of a rubber material.

6. The ball joint according to any one of the preceding claims, **characterized in that** the damping element is injection molded directly onto the inner element (8) and/or onto the driver housing (4).

7. The ball joint according to any one of the preceding claims, **characterized in that** the damping element is integrally formed with the bellows (15).

8. The ball joint according to any one of the claims 1 to 6, **characterized in that** at least one groove is provided on the damping element (9a, 9b), which groove receives an end of the bellows (15).

9. The ball joint according to any one of the preceding claims, with a sealing element (16) that seals the ball joint on the inside at least in one direction, **characterized in that** the sealing element (16) and the sealing element (16) and the damping element (9a, 9b) are formed in one piece.

10. The ball joint according to any one of the preceding claims, **characterized in that** the sealing element (9a, 9b) has at least one recess (23) and that in the recess (23) a material (24) is arranged that differs from the material of the damping element (9a, 9b) and/or has at least different damping properties.

11. The ball joint according to claim 10, **characterized in that** the at least one recess (23) is arranged on the side facing toward the inner element (8) and/or on the damping element side (9a, 9b) facing toward the fastening element (4, 17).

12. A drive arrangement for a motor vehicle that comprises at least one joint according to any one of the preceding claims and at least one hollow shaft section.

13. A method for producing a ball joint, in particular according to any one of the claims 1 to 11, with an inner hub (1) and an outer hub (2) which comprises at least one inner element (8) provided with raceways (13a, 13b), a damping element (9a, 9b) at least regionally engaging around said inner element, and at least one fastening element (4; 17) at least regionally engaging around the inner element (8) and/or the damping element (9a, 9b), **characterized in that** the damping element (9a, 9b) is arranged between the inner element (8) and the fastening element (4; 17) and subsequently the inner element (8) and the damping element (9a, 9b) are connected to each other in the axial direction in only one work step by folding at least one section (20; 22) of the fastening element (4; 17).

14. The method according to claim 13, **characterized in that** simultaneously with axially connecting the inner element (8), the damping element (9a, 9b) and the fastening element (4; 17), a bellows (15) is also fixed to the outer hub (2) by folding a section (20; 22) of the fastening element (4; 17).

15. The method according to claim 13 or claim 14, **characterized in that** the damping element consists of at least two molded parts (9a, 9b) which are arranged one behind the other in the axial direction and which, simultaneously with axially connecting the inner element (8), the damping element and the fastening element (4; 17) by folding a section (20; 22) of the fastening element (4; 17), are fixed in the axial direction.

## Revendications

1. Transmission à billes, en particulier transmission à voie opposée, avec un premier et un deuxième côté et avec un moyeu intérieur (1) et un moyeu extérieur (2), dans lesquels des voies de roulements (12a,13a; 12b, 13b) sont disposées attribuées respectivement à chaque fois par paire dans lesquelles est prévue à chaque fois une bille (14) pour transmettre le couple et avec un soufflet (15) pour étanchéifier la transmission, le moyeu extérieur (2) présentant au moins un élément (8) intérieur muni des voies de roulement (13a, 13b), un élément d'amortissement (9a, 9b) enveloppant celui-ci au moins par zone et au moins un élément de fixation (4; 17) enveloppant au moins par zone cet élément (8) intérieur et/ou l'élément d'amortissement (9a, 9b) **caractérisée en ce qu'**une section (20; 22) rabattue vers l'intérieur dans le sens radial d'exactement un élément de fixation (4; 17) effectue la fixation axiale de l'élément (8) intérieur, de l'élément d'amortissement (9a, 9b) et du soufflet (15) et **en ce que** l'élément de fixation est un capot (17) qui enveloppe le moyeu extérieur (2) et un boîtier d'entraînement (4) qui est conçu pour attacher directement un arbre creux.

2. Transmission à billes selon la revendication 1 **caractérisée en ce que** l'élément de fixation est un boîtier d'entraînement (4) qui est conçu pour attacher directement un arbre creux.

3. Transmission à billes selon une des revendications 1 à 2 **caractérisée en ce que** le soufflet (15), au moyen duquel le moyeu extérieur (2) est étanchéifié contre un élément de raccord attachable de façon résistante à la torsion au moyeu intérieur (1), est maintenu entre l'élément d'amortissement (9a, 9b) et l'élément de fixation (4 ; 17).

4. Transmission à billes selon une des revendications précédentes **caractérisée en ce que** l'élément d'amortissement est composé de deux pièces moulées (9a, 9b) qui présentent respectivement une section (10) profilée, de type manchon et une section à bride (11) se dressant vers l'intérieur dans le sens radial depuis cette section dans la zone d'une extrémité avant de l'élément (8) intérieur.

5. Transmission à billes selon une des revendications précédentes **caractérisée en ce que** l'élément d'amortissement (9a, 9b) est composée au moins en partie d'un matériau d'aluminium, de plastique, en particulier d'un matériau composite en plastique et/ou d'un matériau en caoutchouc.

6. Transmission à billes selon une des revendications précédentes **caractérisée en ce que** l'élément d'amortissement est injecté directement sur l'élément (8) intérieur et/ou sur le boîtier d'entraînement (4).

7. Transmission à billes selon une des revendications précédentes **caractérisée en ce que** l'élément d'entraînement est conçu de façon monobloc avec le soufflet (15).

8. Transmission à billes selon une des revendications 1 à 6 **caractérisée en ce que** sur l'élément d'amortissement (9a, 9b) est prévue au moins une rainure qui reçoit une extrémité du soufflet (15).

9. Transmission à billes selon une des revendications précédentes avec un élément d'étanchéification (16) étanchéifiant la transmission à billes du côté intérieur au moins dans une direction **caractérisée en ce que** l'élément d'étanchéification (16) et l'élément d'amortissement (9a, 9b) sont conçus de façon monobloc.

10. Transmission à billes selon une des revendications précédentes **caractérisée en ce que** l'élément d'étanchéification (9a, 9b) présente au moins un évidement (23) et **en ce que** dans l'évidement (23) est disposé un matériau (24) qui se différencie du matériau de l'élément d'amortissement (9a, 9b) et/ou présente au moins d'autres propriétés d'amortissement.

11. Transmission à billes selon la revendication 10 **caractérisée en ce que** le au moins un évidement (23) est disposé sur le côté tourné vers l'élément (8) intérieur et/ou sur le côté tourné vers l'élément de fixation (4; 17) de l'élément d'amortissement (9a, 9b).

12. Système d'entraînement pour un véhicule qui présente au moins une transmission selon une des revendications précédentes et au moins une section à arbre creux.

13. Procédé pour la fabrication d'une transmission à billes, en particulier selon une des revendications 1 à 11, avec un moyeu intérieur (1) et un moyeu extérieur (2) qui présente au moins un élément (8) intérieur muni de voies de roulement (13a, 13b), un élément d'amortissement (9a, 9b) enveloppant celui-ci au moins par zone et au moins un élément de fixation (4;17) enveloppant au moins par zone l'élément (8) intérieur et/ou l'élément d'amortissement (9a, 9b) **caractérisé en ce que** l'élément d'amortissement (9a, 9b) est disposé entre l'élément (8) intérieur et l'élément de fixation (4 ;17) et en conséquence l'élément (8) intérieur et l'élément d'amortissement (9a, 9b) sont reliés entre eux dans le sens axial en une seule phase de fonctionnement par le rabattement au moins d'une section (20; 22) de l'élément de fixation (4;17).

14. Procédé selon la revendication 13 **caractérisé en ce que** simultanément au rattachement axial de l'élément (8) intérieur, de l'élément d'amortissement (9a, 9b) et de l'élément de fixation (4;17) est également fixé au moyeu extérieur (2) un soufflet (15) par le rabattement d'une section (20; 22) de l'élément de fixation (4;17).

15. Procédé selon la revendication 13 ou 14 **caractérisé en ce que** l'élément d'amortissement est composé d'au moins deux pièces moulées (9a, 9b) disposées l'une derrière l'autre dans le sens axial qui sont simultanément fixées dans le sens axial par le rattachement axial de l'élément (8) intérieur, de l'élément d'amortissement et de l'élément de fixation (4; 17) par le rabattement d'une section (20; 22) de l'élément de fixation (4; 17).
